(19) Europäisches Patentamt
European Patent Office
Office européen des brevets

(11) EP 3 037 182 A1

(12) EUROPEAN PATENT APPLICATION

(43) Date of publication:
29.06.2016 Bulletin 2016/26

(51) Int Cl.:
B07C 5/36 (2006.01)

(21) Application number: 15190852.2

(22) Date of filing: 21.10.2015

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA

(30) Priority: 22.12.2014 JP 2014259294

(71) Applicant: Panasonic Intellectual Property
Management Co., Ltd.
Osaka-shi, Osaka 540-6207 (JP)

(72) Inventors:
• YAMAGUCHI, Naoshi
Osaka, 540-6207 (JP)
• MIYASAKA, Masatoshi
Osaka, 540-6207 (JP)
• HAMADA, Shingo
Osaka, 540-6207 (JP)

(74) Representative: Vigand, Philippe et al
Novagraaf International SA
3 chemin de l'Echo
1213 Onex Geneva (CH)

(54) **SEPARATION APPARATUS**

(57) A separation apparatus includes a first air blower, a plurality of regulating plates, and a second air blower. The first air blower generates a first airflow toward a jumping direction of a separation target at a tip end of the conveyor. The first airflow has a wind speed that matches a transporting speed of a conveyor. The regulating plates are disposed along a flight path of the separation target. The second air blower generates a second airflow toward the flight path from below the flight path.

## FIG. 1A

## Description

### TECHNICAL FIELD

The present disclosure relates to a separation apparatus which separates small pieces of a specific material from a separation target including a plurality of small pieces and, particularly, to a separation apparatus which separates small pieces of a specific type of resin from a separation target obtained by crushing, for example, used home appliances.

### BACKGROUND ART

Economic activities in recent years represented by mass production, mass consumption, and mass disposal have been causing global environmental problems, such as global warming and depletion of resources. Under such circumstances, in an effort to build a recycling-oriented society, attentions have been paid to recycling of home appliances. Thus, recycling of used home appliances, such as air conditioners, televisions, refrigerators, freezers, and washing machines, has become an obligation.

Unneeded home appliances have been recycled by being crushed into small pieces in home appliances recycling plants and separating the small pieces by material type, by using magnetism, wind, oscillation, and others. In particular, use of a specific gravity separation apparatus or a magnetic separation apparatus can separate small pieces made of metal by material type, such as iron, copper, and aluminum, in high purity. For this reason, high recycling rate is achieved.

Meanwhile, in resin materials, small pieces formed of polypropylene (hereinafter, referred to as PP) having a low specific gravity are separated from a component having a high specific gravity through gravity separation using water, and collected with a relatively high purity. However, the gravity separation using water has major problems below. A large amount of wastewater is produced. In addition, it is not possible to separate small species having similar specific gravities, such as small pieces formed of polystyrene (hereinafter, referred to as PS) and small pieces formed of acrylonitrile-butadiene-styrene (hereinafter, referred to as ABS).

International Publication No. 2014/174736 (hereinafter, referred to as Patent Document 1) suggests a separation method in view of the above-described problems related to recycling of resin materials. The technique described in Patent Document 1 detects material types using an identification device, thus makes it possible to perform separation of two types of materials at the same time included in small pieces of resin materials inseparable by the gravity separation to be separated.

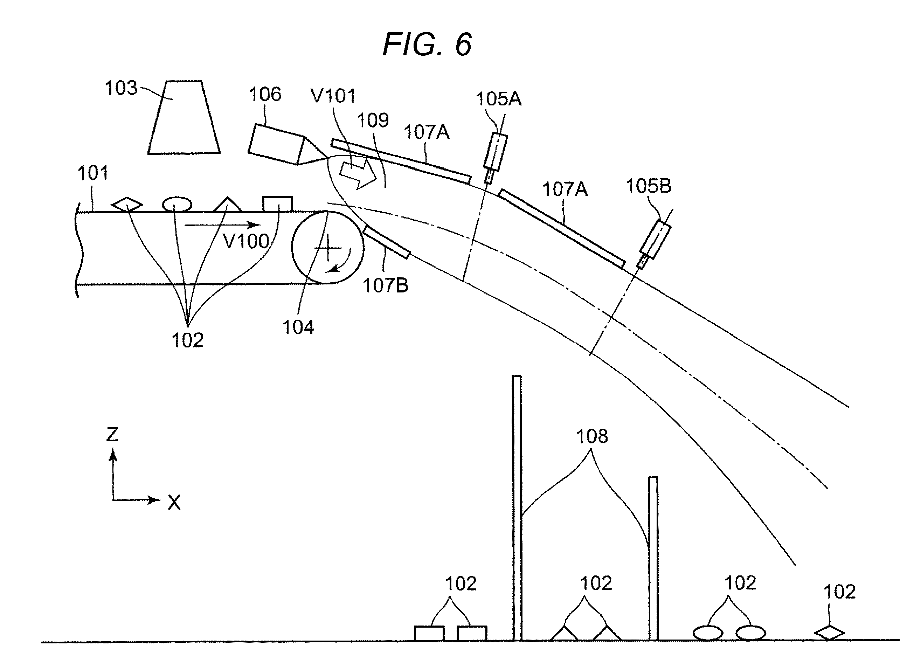

FIG. 6 is a schematic configuration view of a separation apparatus in the related art according to Patent Document 1.

The separation apparatus separates a specific type of material and other types of material than the specific type of material from a separation target among which the specific type of material and the other types of material are present together.

Conveyor 101 transports small resin pieces 102 which are separation targets loaded on conveyor 101 in one direction. When small resin pieces 102 pass through below identification device 103, composition of each of small resin pieces 102 is identified, and at the same time, positional information on conveyor 101 is also obtained.

Small resin pieces 102 which reach conveyor tip end 104 of a transporting direction of conveyor 101 jump out horizontally at the same speed as that of transporting speed V100 of conveyor 101.

First assist nozzle 106 which generates airflow 109 having wind speed V101 that matches transporting speed V100 of conveyor 101 is disposed above conveyor tip end 104, first upper regulating plate 107A is disposed along and above a flight path of small resin pieces 102, and two lower regulating plates 107B are disposed along the flight path of small resin pieces 102 below the flight path and obliquely below conveyor tip end 104. In this configuration, it is possible to allow airflow 109 having a wind speed that matches the transporting speed of conveyor 101 to flow along the flight path of small resin pieces 102 within the flight path.

Small resin pieces 102 horizontally thrown out from conveyor 101 fall while flying. At this time, at the moment when the specific type of resin material among small resin pieces 102 passes through a position where pulse air from the nozzle of first nozzle group 105A or second nozzle group 105B is received, the pulse air is ejected by a command from identification device 103, only the specific type of resin material is shot down, and the specific type of resin material is collected by sections partitioned by partition plate 108.

If first assist nozzle 106, first upper regulating plate 107A, and lower regulating plates 107B are not provided, small resin pieces 102 receive wind speed V101, which is the same as the transporting speed of conveyor 101, from a front surface in an advancing direction immediately after jumping out from conveyor 101, and receive an air resistance force in various manners according to the shape, the area, or the weight of small resin piece 102. In this case, since flight paths of small resin pieces 102 are different from each other, flight unevenness is generated, and the accuracy of shooting at the position where the pulse air of first nozzle group 105A and second nozzle group 105B is received deteriorates.

However, when first assist nozzle 106, first upper regulating plate 107A, and lower regulating plates 107B are installed, first assist nozzle 106 supplies airflow 109 having wind speed V101 which matches the transporting speed of conveyor 101 toward a jumping direction of small resin pieces 102. For this reason, a relative speed of small resin pieces 102 with respect to airflow 109 when jumping out is substantially 0, and the air resistance is also substantially 0. First upper regulating plate 107A and lower regulating plates 107B maintain airflow 109 having wind speed V101 which matches transporting speed V100 of conveyor 101, along the flight path. For this reason, it is possible to realize flight in a state where the air resistance is substantially 0 throughout the flight path.

According to this action, regardless of the shape, the area, or the weight of the resin, the air resistance force is not received within the flight path, and thus, it is possible to suppress flight unevenness of the resin.

An example of the configurations can be provided in that first nozzle group 105A shoots down only the small pieces formed of PS among small resin pieces 102, and second nozzle group 105B shoots down only the small pieces formed of PP among small resin pieces 102. A time period from the time when small resin pieces 102 pass through below identification device 103, to the time when the small resin pieces 102 pass through the position where the pulse air of first nozzle group 105A is received and a time period from the time when small resin pieces 102 pass through below identification device 103, to the time when the small resin pieces 102 pass through the position where the pulse air of second nozzle group 105B is received, are calculated or measured in advance. Next, based on the positional information on conveyor 101 measured by identification device 103, the pulse air is ejected to each of small resin pieces 102 at the moment when small pieces 2 formed of PS among small resin pieces 102 pass through the position where the pulse air of first nozzle group 105A is received, and the other pulse air is ejected to each of small resin pieces 102 at the moment when small pieces 2 formed of PP among small resin pieces 102 pass through the position where the pulse air of second nozzle group 105B is received. In this configuration, small resin pieces 102 formed of respective resins are shot down by the pulse air, and the shot-down resin pieces is collected by the sections partitioned by partition plate 108 according to the material type.

In this configuration, it is possible to separate the two specific types of material and the other types of material from the separation target in which the specific type of material and the other types of material are present together, with high accuracy at the same time.

## SUMMARY OF THE INVENTION

The disclosure provides a separation apparatus which has a configuration in which a wind speed is increased along a flight path so that a resin which is a separation target does not receive an air resistance force.

A separation apparatus according to an aspect of the disclosure separates a specific type of material and other types of material than the specific type of material from a separation target in which the specific type of material and the other types of material are present together. The separation apparatus includes a transporting device, an identifier, a first air blower, an upper regulating plate, a lower regulating plate, a plurality of ejectors, and a second air blower. The transporting device transports the separation target loaded thereon in one direction, and allows the separation target to fly from a tip end thereof. The identifier identifies composition of the specific type of material loaded on the transporting device. The first air blower generates a first airflow toward a jumping direction of the separation target at the tip end of the transporting device, the first airflow having a wind speed that matches a transporting speed of the transporting device. The upper regulating plate is disposed along and above a flight path of the separation target. The lower regulating plate is disposed along and below the flight path, and yet obliquely below the tip end of the transporting device. The plurality of ejectors are disposed above, along and towards the flight path, and eject pulse air to the specific type of material which flies from the transporting device. The second air blower generates a second airflow from below the flight path toward the flight path.

By the above-described configuration, in the separation apparatus according to the aspect of the disclosure, it is possible to install at least three nozzle groups which eject the pulse air, and to separate three types of resin at the same time while suppressing the flight unevenness.

## BRIEF DESCRIPTION OF DRAWINGS

FIG. 1A is a schematic configuration view of a separation apparatus according to an embodiment of the disclosure.
FIG. 1B is a view illustrating configuration elements of the separation apparatus according to the embodiment of the disclosure.
FIG. 2 is a graph illustrating wind speed distribution on a flight path when a distance from a tip end of a transporting device to an airflow junction and a wind speed of a second assist nozzle are changed while a distance from the airflow junction to a tip end of the second assist nozzle is fixed.

FIG. 3 is a graph illustrating wind speed distribution on the flight path when an angle formed by the flight path and an extending line of the second assist nozzle is changed.

FIG. 4 is a graph illustrating the wind speed distribution on the flight path when the distance from the airflow junction to the tip end of the second assist nozzle and the wind speed of the second assist nozzle are changed while a distance from the tip end of the transporting device to the airflow junction is fixed.

FIG. 5A is a view illustrating comparison of the wind speed distribution and the flight unevenness in Example and in Comparative Example of the disclosure.

FIG. 5B is a view illustrating comparison of separation purity and collection rate in Example and in Comparative Example of the disclosure.

FIG. 6 is a schematic configuration view of a separation apparatus in the related art.

FIG. 7 is a schematic configuration view in which the number of separation positions is increased in the separation apparatus in the related art.

FIG. 8 is a view illustrating unevenness of arriving time of small resin pieces and flight unevenness in the separation apparatus in the related art.

FIG. 9A is a schematic view illustrating a flying speed of the small resin pieces.

FIG. 9B is a graph showing the calculated falling speed of the small resin pieces.

## DESCRIPTION OF EMBODIMENTS

Prior to describing an embodiment of the disclosure, a problem in the separation apparatus in the related art will be described. In the separation apparatus in the above-described related art, the flight unevenness of small resin pieces 102 can be suppressed only within a range of 400 mm to 500 mm of the flight distance from conveyor tip end 104. Due to the restriction of the distance, at most only two groups of nozzle groups 105A and 105B which shoot down small resin pieces 102 can be installed. When three nozzle groups are installed, it is necessary to set the flight distance in which the flight unevenness is suppressed to be at least 600 mm to 700 mm.

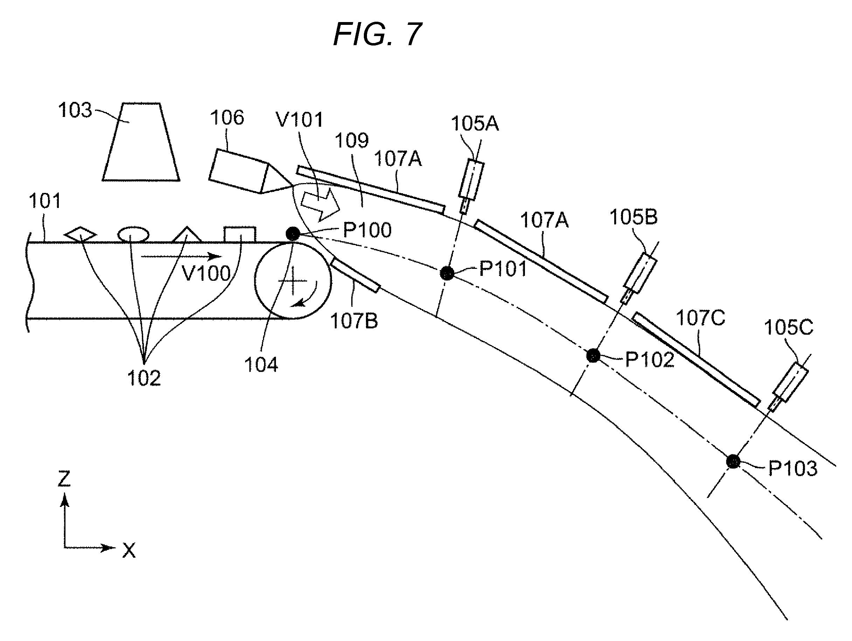

Since the flight distance is supposed to be realized, as illustrated in FIG. 7, second upper regulating plate 107C is installed and extends along the flight path, and third nozzle group 105C is installed, then the separation accuracy is reviewed.

Conveyor tip end 104 is defined as an original point, an orientation of a transporting direction is defined as a positive X axis, an upright orientation of a direction of gravity is defined as a positive Z axis, and a coordinate of conveyor tip end 104 is defined as P100 (X, Z)=(0 mm, 0 mm). On the definition, a position through which a target object passes when the pulse air from first nozzle group 105A is received is P101 (X, Z)=(250 mm, -60 mm). A position through which the target object passes when the pulse air from second nozzle group 105B is received is P102 (X, Z)=(450 mm, -160 mm). A position through which the target object passes when the pulse air from third nozzle group 105C is received is P103 (X, Z)=(600 mm, -250 mm). In addition, transporting speed V100 of conveyor 101 is V100=3 m/s. From first assist nozzle 106, airflow 109 which is equivalent to the transporting speed of conveyor 101 is supplied so that wind speed V101=3 m/s±15%, and a test equivalent to that in Patent Document 1 is conducted.

Since a resin having a small particle size generated when crushing the home appliances into small pieces using a crushing machine is set to be a target as small resin pieces 102 to be tested, resin pieces having slightly different sizes with sides from 10 mm to 100 mm are used.

The time when small resin piece 102 jumps out from conveyor tip end 104 is defined as 0, and times when small resin piece 102 passes through the positions where small resin piece 102 receives pulse air of first nozzle group 105A, second nozzle group 105B, and third nozzle group 105C are defined as t101, t102, and t103, respectively. The times are measured using a high speed camera (HAS-L1M 500 FPS manufactured by DITECT) and image analysis softwar.

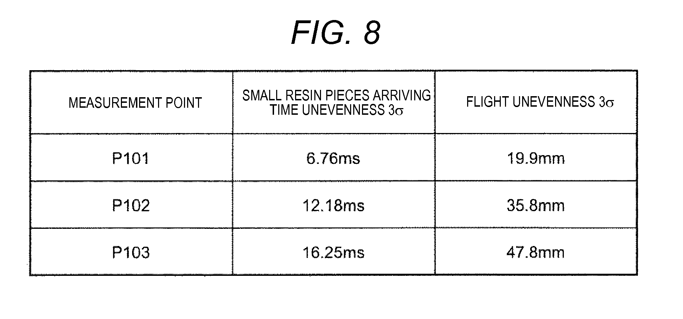

FIG. 8 shows the unevenness of arriving time of small resin pieces 102 at each of positions P101, P102 and P103 where small resin pieces 102 receives the pulse air from first nozzle group 105A, second nozzle group 105B, and third nozzle group 105Cd is illustrated as $3\sigma$ and the unevenness of arriving time of small resin pieces 102 is converted into flight unevenness of small resin pieces 102 by defining flight speed V100 in an X direction as 3 m/s.

According to the result, by small resin pieces 102, at position P101 where the pulse air of first nozzle group 105A is received, timing shift of shooting at 6.76 ms is generated. At position P102 where the pulse air of second nozzle group 105B is received, timing shift of shooting at 12.18 ms is generated. At position P103 where the pulse air of third nozzle group 105C is received, timing shift of shooting at 16.25 ms is generated. When converting the timing shift into a distance, at a time when the nozzle group ejects the pulse air, a shift of maximum 19.9 mm is generated at position P101 where the pulse air of first nozzle group 105A is received. At position P102 where the pulse air of second nozzle group 105B is received, a shift of maximum 35.8 mm is generated. At position P103 where the pulse air of third nozzle group 105C is received, a shift of maximum 47.8 mm is generated.

In order to install three or more stages of nozzle groups, and to separate three types of small resin pieces at the same time, it is necessary to set the flight distance up to third nozzle group 105C to be at least 600 mm, and throughout the flight distance, the flight unevenness should be suppressed. For this, wind speed V101 of airflow 109 on the flight path should be further controlled.

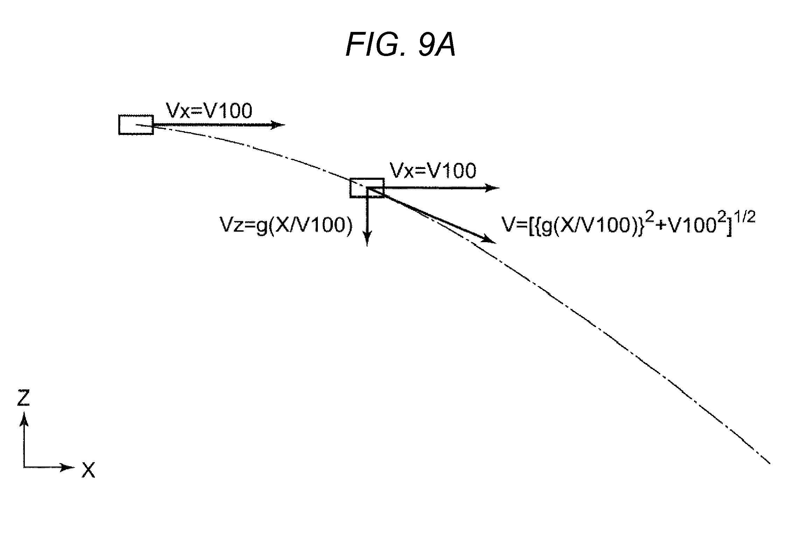

FIG. 9A is a schematic view illustrating gravity and a falling speed which act when an object is thrown out from conveyor 101 in the horizontal direction in a case where there is no air resistance and gravitational acceleration is defined as "g". A right orientation of the horizontal direction is defined as a positive X axis, and an upright orientation of the vertical direction is defined as a positive Z axis. When a speed of an object in the horizontal direction is defined as Vx, in an X-axis direction, Vx=V100 all the time. Speed Vz of an object in the vertical direction at a position where the object advances only by X in the horizontal direction, is Vz= g(X/V100). Accordingly, the falling speed of the object in the advancing direction, that is, speed V in a direction along a tangential line of a parabola of falling of the object, is as described in Expression (1).

$$V=[\{g(X/V100)\}^2+V100^2]^{1/2} \dots (1)$$

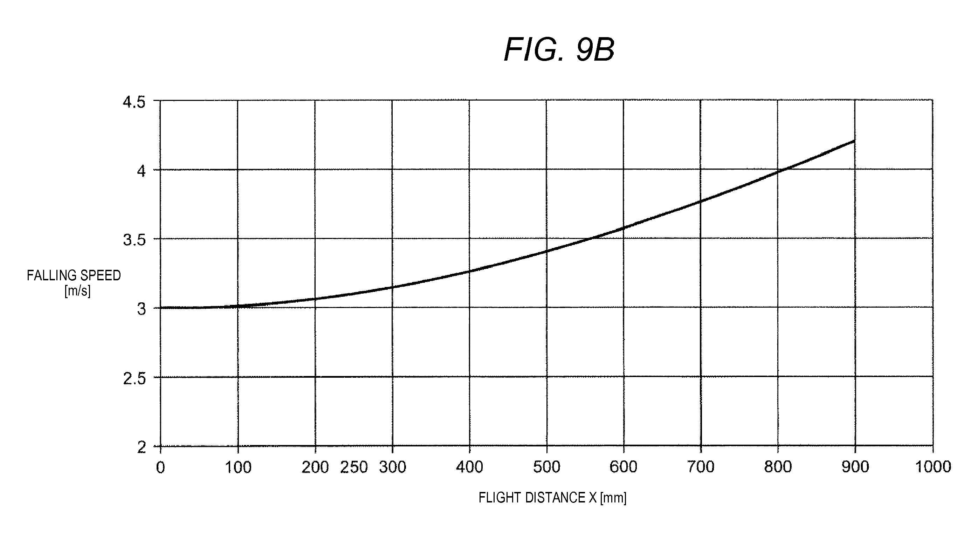

FIG. 9B is a graph showing the calculated falling speed by defining transporting speed V100=3 m/s and an initial speed of small resin pieces 102 V100=3 m/s as well, by ignoring the air resistance force, and by assuming that the falling speed follows Equation (1).

At a position (X=205mm) where the pulse air of first nozzle group 105A is received, falling speed V becomes 3.11 m/s. At a position (X=450 mm) where the pulse air of second nozzle group 105B is received, falling speed V becomes 3.34 m/s. At a position (X=600 mm) where the pulse air of third nozzle group 105C is received, falling speed V becomes 3.58 m/s. In the method of Patent Document 1, since the wind speed of airflow 109 is allowed to match 3 m/s along the flight path, as the flight path is lengthened, wind speed V101 of airflow 109 is likely to differ from falling speed V, and thus small resin pieces 102 receive the air resistance. It is assumed that the air resistance is a reason of generation of the above-described flight unevenness.

In other words, in the configuration of the related art, when small resin pieces 102 which are the separation targets fall along the flight path, even if the wind speed of airflow 109 supplied from first assist nozzle 106 is set to be equivalent to the initial speed of small resin pieces 102, falling speed V increases due to gravity and becomes equal to or greater than the wind speed of the airflow as the flight distance increases. For this reason, as the flight path is lengthened, small resin pieces 102 receive the air resistance force in various manners according to the shape, the area, or the weight thereof. Accordingly, the flight unevenness is generated, and the accuracy of shooting deteriorates when the flight path is equal to or greater than that described in Patent Document 1.

Hereinafter, the embodiment of the disclosure will be described with reference to the drawings.

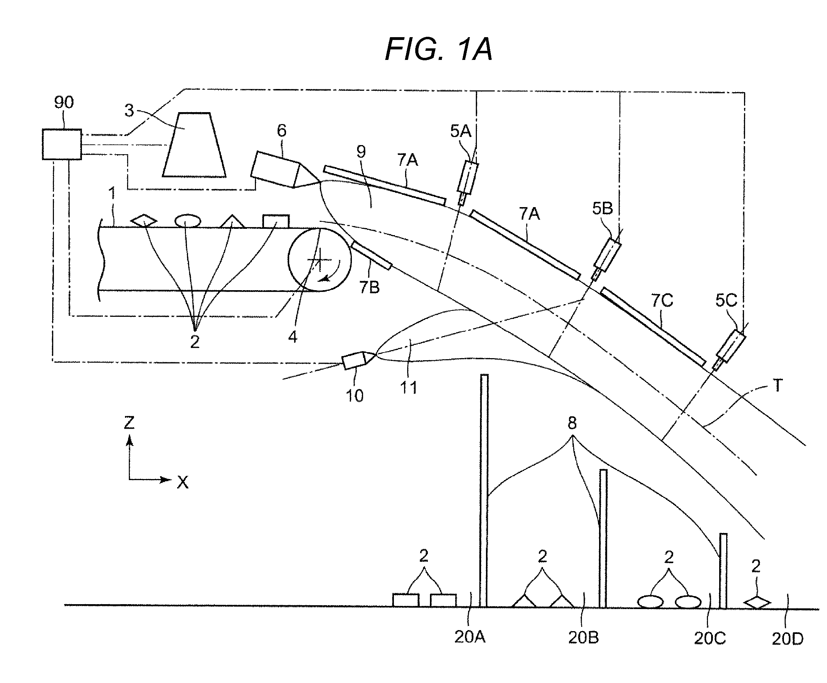

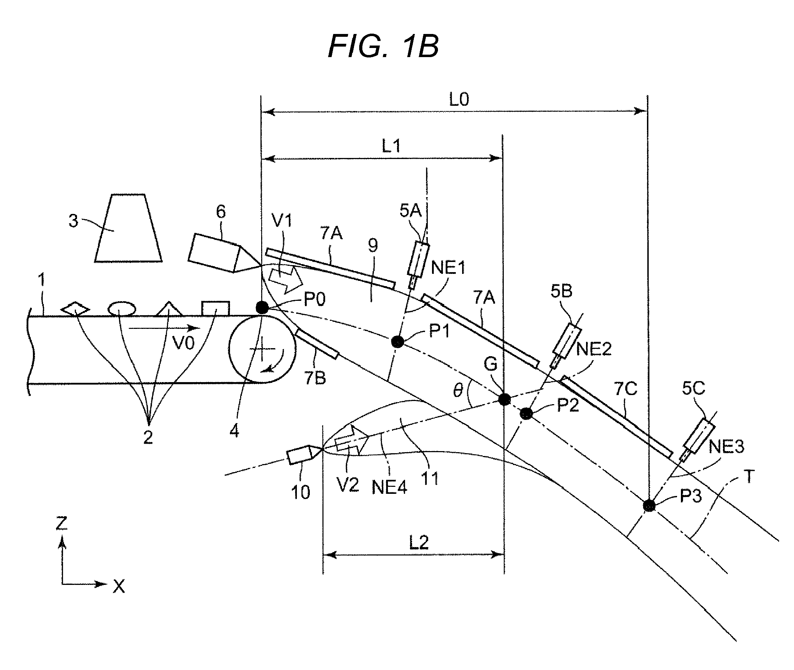

FIG. 1A is a side view of the separation apparatus according to the embodiment of the disclosure. FIG. 1B is a view illustrating configuration elements of the separation apparatus illustrated in FIG. 1A. The separation apparatus includes conveyor 1 as an example of a transporting device; first assist nozzle 6 as an example of a first air blower; identification device 3 as an example of an identifier; first upper regulating plate 7A; second upper regulating plate 7C; lower regulating plate 7B; first nozzle group 5A, second nozzle group 5B, third nozzle group 5C (hereinafter, referred to as nozzle groups 5A, 5B, and 5C) as an example of a plurality of ejectors; and second assist nozzle 10 as an example of a second air blower. First upper regulating plate 7A is provided with a hole through which the pulse air of first nozzle group 5A is introduced at an appropriate position. Alternatively, two first upper regulating plates 7A may be disposed with a gap therebetween. The pulse air of first nozzle group 5A is introduced through the gap. First upper regulating plate 7A and second upper regulating plate 7C are disposed with a gap therebetween. The pulse air of second nozzle group 5B is introduced through the gap.

Furthermore, the separation apparatus also included control device 90. Control device 90 controls operations of each of conveyor 1, first assist nozzle 6, identification device 3, nozzle groups 5A, 5B, and 5C, and second assist nozzle 10. The separation apparatus separates the specific type of material and other types of material than the specific type of material from the separation target in which the specific type of material and the other types of material are present together.

In FIGS. 1A and 1B, conveyor 1 transports small resin pieces 2 in one direction (right direction in FIG. 1A). Small resin pieces 2 are loaded on conveyor 1 and are the separation targets. Small resin pieces 2 which arrive at conveyor tip end 4 of conveyor 1 in the transporting direction jump out in the horizontal direction at the same speed as transporting speed V0 of conveyor 1.

Above the vicinity of tip end of conveyor 1, identification device (identifier) 3 is disposed. When small resin pieces 2 on conveyor 1 pass below identification device 3, identification device 3 obtains the positional information of each of small resin pieces 2 on conveyor 1 as well as identification device 3 identifies the composition thereof.

Above conveyor tip end 4, first assist nozzle 6 is disposed as an example of the first air blower which generates first airflow 9 having wind speed V1 that matches transporting speed V0 of conveyor 1. Flight path T of small resin pieces 2 is formed from conveyor tip end 4 of conveyor 1 and along a blowing direction of an air blowing port of first assist nozzle 6. Flight path T is gradually curved downward.

Above flight path T of small resin pieces 2, first upper regulating plate 7A having a shape of a flat plate is disposed toward a downstream side of flight path T from tip end of first assist nozzle 6 and along flight path T.

Below flight path T of small resin pieces 2, and obliquely below conveyor tip end 4, lower regulating plate 7B having a shape of a flat plate is disposed along flight path T.

At an appropriate position of first upper regulating plate 7A or at a position between two first upper regulating plates 7A, a plurality of nozzles of first nozzle group 5A are disposed as an example of an upstream side ejector of which the air blowing port is toward flight path T. At a downstream side end of first upper regulating plate 7A, a plurality of nozzles of second nozzle group 5B are disposed as an example of an intermediate ejector of which the air blowing port is toward flight path T.

On the downstream side of the nozzles of second nozzle group 5B, second upper regulating plate 7C having a shape of a flat plate is further disposed along flight path T. At a downstream side end of second upper regulating plate 7C, a plurality of nozzles of third nozzle group 5C are disposed as an example of a downstream side ejector of which the air blowing port is toward flight path T. Although not illustrated in the drawings, the plurality of nozzles of each nozzle group are aligned in a direction perpendicular to an XZ face illustrated in FIG. 1A.

In FIGS. 1A and 1B, second assist nozzle 10 as an example of the second air blower is disposed outside and on a lower side of flight path T of small resin pieces 2 which are the separation targets. Second assist nozzle 10 supplies second airflow 11 from the air blowing port thereof toward the vicinity of the tip ends of the nozzles of second nozzle group 5B in flight path T. Intersection G between flight path T and extending line NE4 in a direction of the air blowing port of second assist nozzle 10 is defined as an airflow junction between first airflow 9 and second airflow 11. On the definition, second assist nozzle 10 is disposed and the wind speed of second assist nozzle 10 is set so that airflow junction G is disposed in the vicinity of intersection P2 between flight path T and nozzle extending line NE2 of second nozzle group 5B, for example, in the vicinity on the upstream side of intersection P2.

In one configuration example, only small pieces 2 formed of PS among small resin pieces 2 are shot down by first nozzle group 5A, only small pieces 2 formed of PP among small resin pieces 2 are shot down by second nozzle group 5B, and only small pieces 2 formed of ABS among small resin pieces 2 are shot down by third nozzle group 5C. Accordingly, collecting section 20A is for small pieces 2 formed of PS, collecting section 20B is for small pieces 2 formed of PP, collecting section 20C is for small pieces 2 formed of ABS, and collecting section 20D is for other types of small resin pieces 2.

In this configuration, first airflow 9 supplied from first assist nozzle 6 and having a wind speed that matches the transporting speed of conveyor 1 flows along flight path T of small resin pieces 2 by first upper regulating plate 7A, lower regulating plate 7B, and second upper regulating plate 7C. When second assist nozzle 10 supplies second airflow 11 toward the vicinity of the tip end of the nozzles of second nozzle group 5B in flight path T, that is, toward the vicinity between first upper regulating plate 7A and second upper regulating plate 7C, second airflow 11 smoothly merges with first airflow 9 while being diffused.

First assist nozzle 6 supplies first airflow 9 having wind speed V1 that matches the transporting speed of conveyor 1 toward the jumping direction of small resin pieces 2. For this reason, a relative speed of small resin pieces 2 with respect to first airflow 9 when jumping out being thrown out from conveyor 1 in the horizontal direction is substantially 0, and the air resistance is also substantially 0. Accordingly, first airflow 9 having wind speed V1 that matches transporting speed V0 of conveyor 1 is maintained along flight path T on which first upper regulating plate 7A and lower regulating plate 7B are disposed. For this reason, on flight path T up to the vicinity of second nozzle group 5B, small resin pieces 2 flies along flight path T in a state where the air resistance is substantially 0. At this time, at the moment when the small resin piece of the specific type among small resin pieces 2 passes through the position where the pulse air of first nozzle group 5A or second nozzle group 5B is received, the pulse air is ejected from first nozzle group 5A or second nozzle group 5B. Then, only the small resin piece of the specific type is shot down and collected by one of sections 20A, 20B, 20C, and 20D which are partitioned from each other by three partition plates 8. The pulse air is ejected under the control of control device 90 based on the information from identification device 3.

In addition, second airflow 11 is supplied from the air blowing port of second assist nozzle 10 toward the vicinity of the tip end of the nozzles of second nozzle group 5B within flight path T, and merges with first airflow 9 while being diffused. Therefore, when the flight of small resin pieces 2 reaches flight path T in the vicinity of second nozzle group 5B, the wind speed can be increased along flight path T and the flight distance increases so that small resin pieces 2 do not receive the air resistance. Then, among small resin pieces 2, the small resin piece of the specific type can pass through the position where the pulse air of the nozzles of third nozzle group 5C is received. At the moment when small resin piece passes through the position, the pulse air is ejected from third nozzle group 5C, only the small resin piece of the specific type is shot down, and the small resin piece is collected by section 20C. The pulse air is ejected under the control of control device 90 based on the information from identification device 3.

**EP 3 037 182 A1**

According to the configuration described above, it is possible to increase the wind speed along flight path T so that small resin pieces 2 which are the separation targets do not receive the air resistance. Accordingly, even when the flight distance is lengthened, regardless of the shape, the area, or the weight of small resin pieces 2, small resin pieces 2 do not receive the air resistance, the flight unevenness can be suppressed, and the accuracy of shooting can be improved.

Hereinafter, an operation of shooting down small resin pieces 2 by the pulse air will be described.

First, times when each of small resin pieces 2 passes through the positions where small resin piece 2 receives the respective pulse air of first nozzle group 5A, second nozzle group 5B, and third nozzle group 5C are calculated or measured in advance based on the time when small resin piece 2 passes below identification device 3 on conveyor 1 by a passing time obtainer of a computer or the like inside control device 90.

Next, from the positional information on conveyor 1 measured by identification device 3, under the control of control device 90, at the moment when small pieces 2 formed of PS among small resin pieces 2 pass through position P1 where small pieces 2 formed of PS receive the pulse air of first nozzle group 5A, first nozzle group 5A ejects the pulse air toward small resin pieces 2 formed of PS. In addition, at the moment when small pieces 2 formed of PP among small resin pieces 2 pass through position P2 where small pieces 2 formed of PP receive the pulse air of second nozzle group 5B, second nozzle group 5B ejects the pulse air toward small resin pieces 2 formed of PP. Furthermore, at the moment when small pieces 2 formed of ABS among small resin pieces 2 pass through position P3 where small pieces 2 formed of ABS receive the pulse air of third nozzle group 5C, third nozzle group 5C ejects the pulse air from the nozzles toward small resin pieces 2 formed of ABS.

In this configuration, small resin pieces 2 is shoot down by the pulse air, and the shot-down resin pieces is collected by any of four sections 20A, 20B, 20C, and 20D partitioned by partition plate 8 according to the material type.

Therefore, according to the embodiment, as second airflow 11 is supplied from second assist nozzle 10, it is possible to increase the wind speed along flight path T so that small resin pieces 2 which are the separation targets do not receive the air resistance. Accordingly, even when the flight distance of small resin pieces 2 is lengthened, small resin pieces 2 do not receive the air resistance regardless of the shape, the area, and the weight thereof, the flight unevenness can be suppressed, and the accuracy of shooting can be improved. Therefore, from small resin pieces 2 which are the separation targets in which the specific types of material and the other types of material are present together, it is possible to separate three specific types of material and other types of material at the same time with high accuracy. Even when small resin pieces 2 which are configured of three types of material are independently separated on sequential flight path T, it is possible to improve separation purity and a collection yield of each of desired specific types of material of small pieces 2.

Hereinafter, a method for reliably separating the separation target according to the embodiment will be described based on specific examples.

As illustrated in FIG. 1B, the transporting speed of conveyor 1 is defined as V0. A distance in the horizontal direction from conveyor tip end 4 up to the position where the pulse air of third nozzle group 5C is received on the most downstream side of flight path T is defined as entire flight distance L0. In other words, entire flight distance L0 is a flight distance in the X-axis direction from conveyor tip end 4 up to the position where the pulse air of third nozzle group 5C is received illustrated in FIG. 1B. An intersection between flight path T of small resin pieces 2 and extending line NE4 in a direction of the air blowing port of second assist nozzle 10 is defined as airflow junction G (hereinafter, referred to as junction G). A distance in the X-axis direction (horizontal direction) from conveyor tip end 4 to junction G is defined as L1. An angle (junction angle) which is made by a tangential line of flight path T at junction G and extending line NE4 (the extending line in a direction of the air blowing port) of second assist nozzle 10 is defined as θ. A distance in the X-axis direction (horizontal direction) from junction G up to the tip end of the air blowing port of second assist nozzle 10 is defined as L2. A wind speed of first airflow 9 supplied from first assist nozzle 6 is defined as V1. A wind speed of second airflow 11 supplied from second assist nozzle 10 is defined as V2. In other words, wind speeds V1 and V2 are respectively wind speeds of the air blowing ports of first assist nozzle 6 and second assist nozzle 10.

When distance L1, distance L2, junction angle θ, wind speed V1, and wind speed V2 are appropriately selected, wind speed distribution on flight path T of small resin pieces 2 which matches flight path T of small resin pieces 2, and matches the falling speed of small resin pieces 2, is obtained. When measuring the wind speed distribution, each measurement point is defined as follows. A point of conveyor tip end 4 is defined as P0. A point at which small resin pieces 2 pass through the position where the pulse air of first nozzle group 5A is received, that is, an intersection between flight path T and nozzle extending line NE1 of first nozzle group 5A, is defined as P1. A point at which small resin pieces 2 pass through the position where the pulse air of second nozzle group 5B is received, that is, an intersection between flight path T and nozzle extending line NE2 of second nozzle group 5B, is defined as P2. A point at which small resin pieces 2 pass through the position where the pulse air of third nozzle group 5C is received, that is, an intersection between flight path T and nozzle extending line NE3 of third nozzle group 5C, is defined as P3.

For example, coordinates of measurement points P0, P1, P2, and P3 are P0(X, Z)=(0 mm, 0 mm), P1(X, Z)=(250 mm, -60 mm), P2(X,Z)=(450 mm, -160 mm), and P3(X, Z)=(600 mm, -250 mm). X-coordinate and Z-coordinate are respectively a coordinate in the horizontal direction and a coordinate in the perpendicular direction by considering the position of P0 as 0.

For example, an initial speed of jumping of small resin pieces 2 in the horizontal direction is equivalent to transporting speed V0 of conveyor 1, and V0 is set to be 3 m/s.

Entire flight distance L0 is set to be 600 mm. By using a wind speed and temperature probe (QA-30) manufactured by Tohnic, wind speed V1 at point P0 of first airflow 9 supplied from first assist nozzle 6 is set to be within 3 m/s±15%. In other words, the expression that V1 is within 3 m/s±15% means that V1 is within V0±15% In other words, this means that V1/V0 is set to be within 1±0.15 (within a range from 0.85 to 1.15, inclusive). All of the wind speeds in Example are measured by using the wind speed and temperature probe (QA-30) manufactured by Tohnic.

<Regarding Ratio of (L1/L0)>

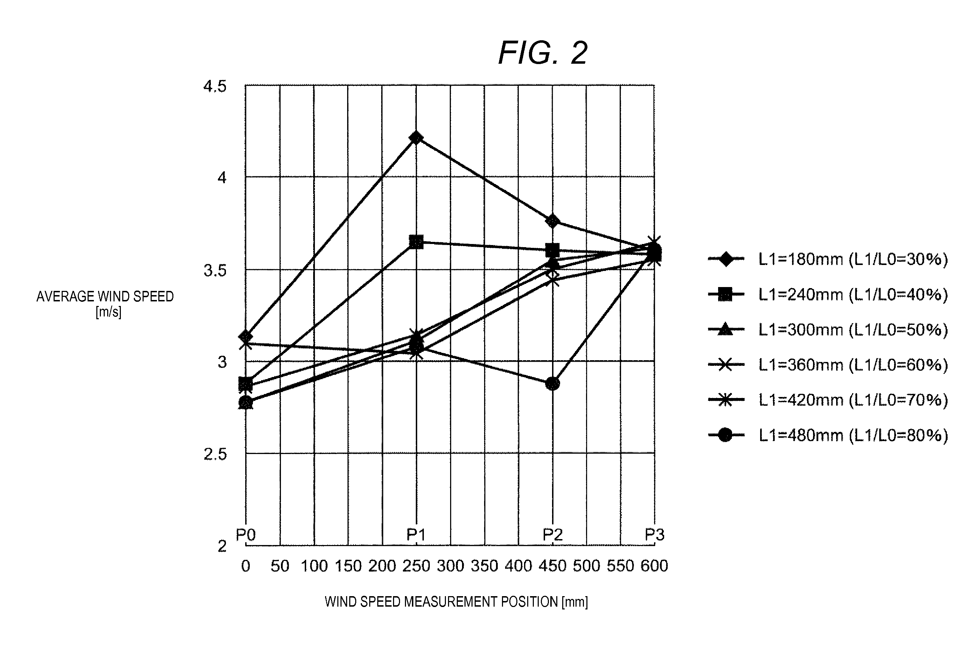

Under a condition in which L2 is fixed to 200 mm and θ is fixed to 20°, and while changing distance L1 from conveyor tip end 4 to junction G, the wind speeds at measurement points P0, P1, P2, and P3 are measured. Wind speed V2 of the tip end of second assist nozzle 10 is adjusted so that the wind speed at point P3 at which small resin pieces 2 pass through the position where the pulse air of third nozzle group 5C is received becomes 3.58 m/s±15% which is equivalent to the falling speed of small resin pieces 2 which pass through entire flight distance L0 (600 mm). FIG. 2 is a graph illustrating the wind speed distribution.

According to FIG. 2, the wind speed distribution matches an increase in the falling speed on flight path T of small resin pieces 2. In particular, when L1 is less than 300 mm, junction G is too close to the upstream side of flight path T of small resin pieces 2, and the wind speed excessively increases at the upstream of first airflow 9. Meanwhile, when L1is greater than 420 mm, junction G is too close to the downstream side of flight path T of small resin pieces 2, and it is assumed that the wind speed increases only on the downstream side of first airflow 9. Therefore, a range of 300 mm≤L1≤420 mm, that is, a range of 0.5≤L1/L0≤0.7 is preferable.

<Regarding junction angle θ>

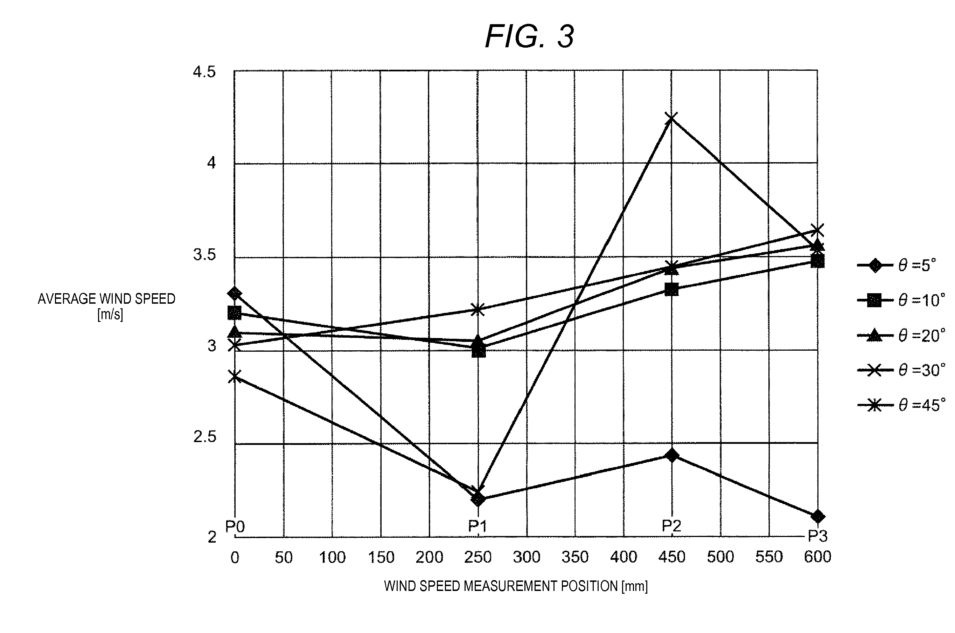

Next, under a condition in which L2 is fixed to 200 mm and L1 is fixed to 360 mm, and while changing junction angle θ which is made by the tangential line of flight path T of small resin pieces 2 at junction G and extending line NE4 of second assist nozzle 10, the wind speeds at measurement points P0, P1, P2, and P3 are measured. Wind speed V2 of the tip end of second assist nozzle 10 is adjusted so that the wind speed at point P3 at which small resin pieces 2 pass through the position where the pulse air of third nozzle group 5C is received becomes 3.58 m/s±15% which is equivalent to the falling speed of small resin pieces 2 which pass through entire flight distance L0 (600 mm). FIG. 3 is a graph illustrating the wind speed distribution.

According to FIG. 3, the wind speed distribution matches the increase in the falling speed on flight path T of small resin pieces 2. In particular, when junction angle θ is less than 10°, second assist nozzle 10 itself is positioned in first airflow 9 supplied from first assist nozzle 6, and accordingly, the wind speed distribution is disturbed. In contrast, when junction angle θ is greater than 30°, it is assumed that first airflow 9 of first assist nozzle 6 and second airflow 11 of second assist nozzle 10 do not smoothly merge with each other, and turbulence is generated. Therefore, junction angle θ which is made by flight path T of small resin pieces 2 and extending line NE4 of second assist nozzle 10 is preferable when 10°≤θ≤30° is satisfied.

<Regarding Ratio of (L2/L0) and Ratio of (V2/L2)>

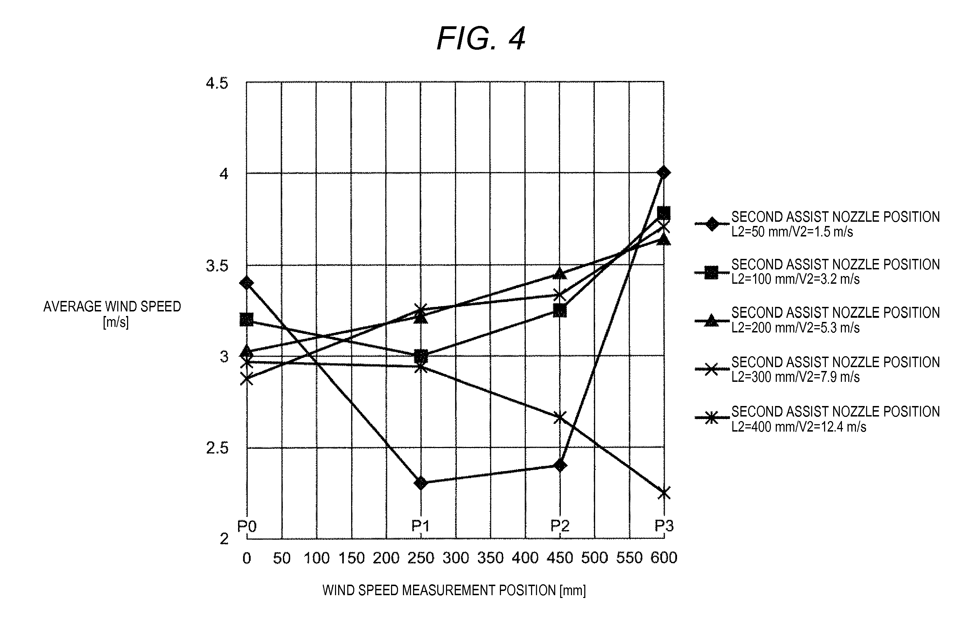

Furthermore, under a condition in which L1 is fixed to 360 mm and θ is fixed to 20°, and while changing distance L2 from junction G to the tip end of second assist nozzle 10 in the X direction, the wind speeds at measurement points P0, P1, P2, and P3 are measured. Wind speed V2 of the tip end of second assist nozzle 10 is adjusted so that the wind speed at point P3 at which small resin pieces 2 pass through the position where the pulse air of third nozzle group 5C is received becomes 3.58 m/s±15% which is equivalent to the falling speed of small resin pieces 2 which pass through entire flight distance L0 (600 mm). FIG. 4 is a graph illustrating the wind speed distribution.

According to FIG. 4, the wind speed distribution matches the increase in the falling speed on flight path T of small resin pieces 2. In particular, when L2 is less than 100 mm, second assist nozzle 10 is positioned in first airflow 9 supplied from first assist nozzle 6, and accordingly, the wind speed distribution is disturbed. If L2 is greater than 300 mm, no matter how wind speed V2 of the tip end of second assist nozzle 10 increases, it is assumed that an excellent wind speed is not obtained because second airflow 11 supplied from second assist nozzle 10 is excessively diffused. Therefore, it is preferable that distance L2 from junction G to the tip end of second assist nozzle 10 in the X direction is in a range from 100 mm to 300 mm, inclusive, that is, a range of 0.15≤L2/L0≤0.5 is preferable. In addition, V2/L2 which is a ratio between wind speed V2 (m/s) of the tip end of second assist nozzle 10 and distance L2 (m) from junction G to the tip end of second assist nozzle 10 is preferable when satisfying 25≤V2/L2≤35.

<Comparison>

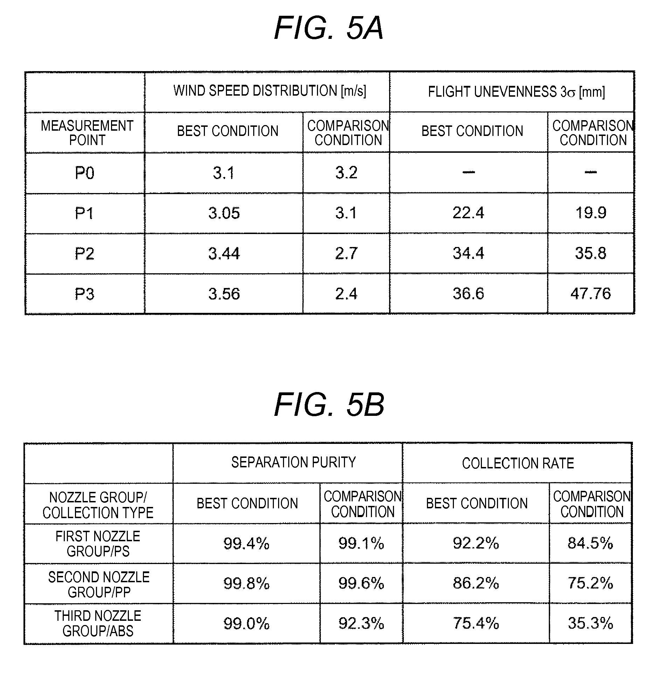

FIG. 5A shows a result of measurement of each of the wind speed distribution and the flight unevenness under the condition that the wind speed distribution is the best. In addition, a measurement result of a case where second assist nozzle 10 in the configuration of FIG. 7 is not used is shown as a comparison condition. FIG. 5B shows a result of measurement of the separation accuracy under the condition that the wind speed distribution is the best. In addition, a measurement result of a case where second assist nozzle 10 in the configuration of FIG. 7 is not used is shown as a comparison condition.

As an evaluation of the separation accuracy, the separation purity and the collection rate are calculated as follows. Small pieces 2 formed of PS are shot down by first nozzle group 5A, from small resin pieces 2 including small pieces 2 formed of PS, small pieces 2 formed of PP, and small pieces 2 formed of ABS. Next, small pieces 2 formed of PP are shot down by second nozzle group 5B. Small pieces 2 formed of ABS are shot down by third nozzle group 5C. Then, each of small pieces is collected by sections 20A, 20B, and 20C partitioned by partition plates 8. Regarding the particle size of the used sample, 240 pieces of samples having different sizes with sides from 10 mm to 100 mm are used, and an average value after performing three times of separation is employed. The separation purity and the collection rate are calculated by using the following equations.

Separation purity (%)=(among the small resin pieces collected by the partitioned section, a weight of specified small resin pieces/a weight of the small resin pieces collected by the partitioned section)×100

$$\text{Collection rate }(\%)=(\text{among the small resin pieces collected by the}$$
$$\text{partitioned section, a weight of specified small resin pieces/a weight of a}$$
$$\text{specified small resin pieces included in all of the small resin pieces before}$$
$$\text{separation})\times100$$

The best condition is as follows. When L2 is 200 mm, θ is 20°, and L1 is 360 mm, wind speed V2 at the tip end of second assist nozzle 10 is adjusted so that the wind speed at point P3 at which small resin pieces 2 pass through the position where the pulse air of third nozzle group 5C is received becomes 3.58 m/s±15% which is equivalent to the falling speed of small resin pieces 2 which pass through entire flight distance L0(600 mm). Specifically, V2 is 5.3 m/s.

As a result from FIG. 5A, it is understood that the wind speed (the wind speeds at the measurement points P0 to P3) along flight path T of small resin pieces 2 increases approximately from 3 m/s to 3.6 m/s under the above-described best condition, and the wind speed decreases approximately from 3 m/s to 2.4 m/s under the comparison condition. According to these situations, under the best condition, flight unevenness 3σ is maintained to be equal to or less than 37 mm, but under the comparison condition, flight unevenness 3σ becomes equal to or greater than 45 mm. In other words, the flight unevenness can be reduced by the configuration in which the wind speed is increased along flight path T. In addition, as shown in FIG. 5B, 99% or more of separation purity and 70% or more of collection rate in all cases of PS, PP, and ABS are ensured under the best condition. However, under the comparison condition, 99% or more of separation purity and 75% or more of collection rate are ensured in the cases of PS and PP, but the separation purity is 92.3% and the collection rate is 35.3% in the case of ABS.

According to the embodiment, since the flight unevenness is suppressed on the entire flight path T of small resin pieces 2, the separation accuracy is excellent in all cases of PS, PP, and ABS. Therefore, when the separation apparatus according to the embodiment which has a configuration in which the wind speed is increased along flight path T is used, the flight unevenness also decreases by increasing the wind speed along flight path T, and the separation accuracy is improved.

As described above, according to the embodiment, it is possible to realize the separation apparatus which can install at least three nozzle groups that eject the pulse air, and in which the flight unevenness is suppressed. In the separation apparatus in the related art, at most only two nozzle groups which eject the pulse air can be installed, and the flight unevenness of the resin is generated. In contrast, the separation apparatus according to the embodiment can separate three types of resin at the same time.

By appropriately combining arbitrary embodiments or modification examples among the above-described various embodiments and modification examples, it is possible to achieve the effects of each of the embodiments and modification examples. It is possible to combine the embodiments with each other, the examples with each other, or the embodiment with the example, and also to combine characteristics of different embodiments and examples with each other.

As described above, according to the disclosure, even when three types of material of small pieces are independently separated on a flight path, it is possible to improve the separation purity and collection yield of the desired specific type of material of the small pieces. For this reason, the separation apparatus of the disclosure can recycle the specific type of material of small pieces included in used home appliances or general waste, and is applicable in resource circulation of the material.

**Claims**

1. A separation apparatus which separates a specific type of material and other types of material than the specific type of material from a separation target in which the specific type of material and the other types of material are present together, the apparatus comprising:

   a transporting device configured to transport the separation target loaded thereon in one direction, and allow the separation target to fly from a tip end thereof;
   an identifier configured to identify composition of the specific type of material loaded on the transporting device;
   a first air blower configured to generate a first airflow toward a jumping direction of the separation target at the tip end of the transporting device, the first airflow having a wind speed that matches a transporting speed of the transporting device;
   an upper regulating plate disposed along and above a flight path of the separation target;
   a lower regulating plate disposed along and below the flight path, and yet obliquely below the tip end;
   a plurality of ejectors disposed above, along, and toward the flight path , and configured to eject pulse air to the specific type of material which flies from the transporting device; and
   a second air blower configured to generate a second airflow from below the flight path toward the flight path .

2. The separation apparatus according to claim 1,
   wherein the plurality of ejectors include an upstream side ejector, an intermediate ejector, and a downstream side ejector which are disposed in order from an upstream side to a downstream side along the flight path, and
   wherein the intersection between the flight path and the extending line toward the air blowing port of the second air blower is defined as the airflow junction between the first airflow and the second airflow, and the airflow junction is disposed in a vicinity of an intersection between the flight path and a nozzle extending line of the intermediate ejector.

3. The separation apparatus according to any one of claims 1 and 2,
   wherein relations of $0.5{\leq}L1/L0{\leq}0.7$, $10°{\leq}\theta{\leq}30°$, $0.15{\leq}L2/L0{\leq}0.5$, and $25{\leq}V2/L2{\leq}35$ are satisfied,
   where L0 is determined as a flight distance from the tip end of the transporting device to the position where the pulse air of one of the ejectors on a most downstream side of the flight path is received in a horizontal direction,
   intersection between the flight path of the separation target and an extending line toward an air blowing port of the second air blower is defined as an airflow junction between the first airflow and the second airflow, and L1 is determined as an a distance from the tip end of the transporting device to the airflow junction in the horizontal direction,
   $\theta$ is determined as an angle made by a tangential line of the flight path at the airflow junction and the extending line toward the air blowing port of the second air blower
   L2 is determined as a distance from the airflow junction to the tip end of the air blowing port of the second air blower in the horizontal direction, and
   V2 is determined as a wind speed at the air blowing port of the second air blower,
   wherein L0, L1 and L2 are measured in meters, and V2 is measured in meters per second.

# FIG. 1A

## FIG. 1B

EP 3 037 182 A1

*FIG. 2*

AVERAGE WIND SPEED
[m/s]

WIND SPEED MEASUREMENT POSITION [mm]

L1=180mm (L1/L0=30%)

L1=240mm (L1/L0=40%)

L1=300mm (L1/L0=50%)

L1=360mm (L1/L0=60%)

L1=420mm (L1/L0=70%)

L1=480mm (L1/L0=80%)

EP 3 037 182 A1

# FIG. 3

EP 3 037 182 A1

# FIG. 4

EP 3 037 182 A1

# FIG. 5A

| MEASUREMENT POINT | WIND SPEED DISTRIBUTION [m/s] | | FLIGHT UNEVENNESS 3σ [mm] | |
|---|---|---|---|---|
| | BEST CONDITION | COMPARISON CONDITION | BEST CONDITION | COMPARISON CONDITION |
| P0 | 3.1 | 3.2 | — | — |
| P1 | 3.05 | 3.1 | 22.4 | 19.9 |
| P2 | 3.44 | 2.7 | 34.4 | 35.8 |
| P3 | 3.56 | 2.4 | 36.6 | 47.76 |

# FIG. 5B

| NOZZLE GROUP/ COLLECTION TYPE | SEPARATION PURITY | | COLLECTION RATE | |
|---|---|---|---|---|
| | BEST CONDITION | COMPARISON CONDITION | BEST CONDITION | COMPARISON CONDITION |
| FIRST NOZZLE GROUP/PS | 99.4% | 99.1% | 92.2% | 84.5% |
| SECOND NOZZLE GROUP/PP | 99.8% | 99.6% | 86.2% | 75.2% |
| THIRD NOZZLE GROUP/ABS | 99.0% | 92.3% | 75.4% | 35.3% |

## FIG. 6

EP 3 037 182 A1

## FIG. 7

EP 3 037 182 A1

# FIG. 8

| MEASUREMENT POINT | SMALL RESIN PIECES ARRIVING TIME UNEVENNESS $3\sigma$ | FLIGHT UNEVENNESS $3\sigma$ |
|---|---|---|
| P101 | 6.76ms | 19.9mm |
| P102 | 12.18ms | 35.8mm |
| P103 | 16.25ms | 47.8mm |

## FIG. 9A

$Vx=V100$

$Vx=V100$

$Vz=g(X/V100)$

$V=[\{g(X/V100)\}^2+V100^2]^{1/2}$

Z

X

EP 3 037 182 A1

*FIG. 9B*

EP 3 037 182 A1

Europäisches
Patentamt
European
Patent Office
Office européen
des brevets

## EUROPEAN SEARCH REPORT

Application Number

EP 15 19 0852

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/245156 A1 (GADDIS PAUL G [US] ET AL) 9 December 2004 (2004-12-09) * figure 1 * ----- | 1-3 | INV. B07C5/36 |
| A | WO 00/58035 A1 (SRC VISION INC [US]; CAMPBELL DUNCAN B [US]; HOFFMAN TODD E [US]; LEID) 5 October 2000 (2000-10-05) * figure 2 * ----- | 1-3 | |
| A | US 2014/197078 A1 (KOJIMA TAMAO [JP] ET AL) 17 July 2014 (2014-07-17) * figures * ----- | 1-3 | |

TECHNICAL FIELDS
SEARCHED       (IPC)

B07C

The present search report has been drawn up for all claims

| Place of search | Date of completion of the search | Examiner |
|---|---|---|
| Munich | 10 May 2016 | Wich, Roland |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

# EP 3 037 182 A1

## ANNEX TO THE EUROPEAN SEARCH REPORT
## ON EUROPEAN PATENT APPLICATION NO.

EP 15 19 0852

This annex lists the patent family members relating to the patent documents cited in the above-mentioned European search report.
The members are as contained in the European Patent Office EDP file on
The European Patent Office is in no way liable for these particulars which are merely given for the purpose of information.

10-05-2016

| Patent document cited in search report | Publication date | Patent family member(s) | Publication date |
|---|---|---|---|
| US 2004245156 A1 | 09-12-2004 | CA 2469970 A1<br>US 2004245156 A1 | 06-12-2004<br>09-12-2004 |
| WO 0058035 A1 | 05-10-2000 | AU 3930000 A<br>EP 1173292 A1<br>TW 449508 B<br>US 6646218 B1<br>WO 0058035 A1 | 16-10-2000<br>23-01-2002<br>11-08-2001<br>11-11-2003<br>05-10-2000 |
| US 2014197078 A1 | 17-07-2014 | CN 103260776 A<br>EP 2792424 A1<br>JP 5496367 B2<br>JP WO2013088609 A1<br>US 2014197078 A1<br>WO 2013088609 A1 | 21-08-2013<br>22-10-2014<br>21-05-2014<br>27-04-2015<br>17-07-2014<br>20-06-2013 |

For more details about this annex : see Official Journal of the European Patent Office, No. 12/82

**EP 3 037 182 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014174736 A